# EUROPEAN PATENT SPECIFICATION

(11) **EP 2 249 526 B1**
(45) Date of publication and mention of the grant of the patent: **04.07.2012**
(21) Application number: 09305403.9
(22) Date of filing: 06.05.2009
(51) Int. Cl.: H04L 12/56, H04J 14/02

(54) **Protection of user data transmission through a transport network**
Schutz einer Benutzerdatenübertragung durch ein Transportnetz
Protection de la transmission de données d'utilisateur via un réseau de transport

(43) Date of publication of application: 10.11.2010
(73) Proprietor: Alcatel Lucent, 75007 Paris (FR)
(72) Inventor: Coltro, Claudio, 20060, CASSINA DE PECCHI MI (IT)
(74) Representative: Wetzel, Emmanuelle

(56) References cited:
- US-A1- 2006 187 715
- US-B1- 6 725 401

## Description

### Field of the invention

The present invention relates to the field of the communication networks, in particular to protection of user data transmission through a transport network.

### Background

It is known that a communication network comprises a number of network elements interconnected for transporting data associated to various communication services. A communication network may be either a circuit-switched network or a packet-switched network.

In circuit-switched networks, data are typically transported along predefined paths, in the form of continuous data flows arranged in data containers. Exemplary circuit-switched networks are SDH (Synchronous Digital Hierarchy) networks, SONET (Synchronous Optical NETwork) and OTN (Optical Transport Network). In SDH/SONET networks and OTN networks, different types of data containers are provided, that are arranged according to a hierarchical structure. For instance, in SDH/SONET networks, lower order virtual containers and higher order virtual containers are different types of data containers. On the other hand, in OTN networks, optical channel payload units (OPU) and optical data units (ODU) are different types of data containers.

In a circuit-switched network, the paths are typically manually established by an operator, by suitably configuring the network elements. Modifying the paths requires manually changing configuration of the network elements. However, recently, circuit-switched networks have been developed (that are called ASTN, i.e. Automatic Switched Transport Networks), having the capability of autonomously establishing and modifying the paths. In case a change occurs in the network (e.g. network elements are added to or removed from the network, or a failure occurs in the network), such circuit-switched networks are capable of automatically modifying the paths taking into account such change, without requiring any manual intervention by the operator.

In packet-switched networks, data to be transmitted are typically divided in packets, and each packet is independently routed by the network elements from source to destination. Exemplary packet-switched networks are Ethernet networks, IP (Internet Protocol) networks and ATM (Asynchronous Transfer Mode) networks.

A communication system may comprise a transport network implemented as a circuit-switched network and user networks connected to the transport network, each user network being implemented as a packet-switched network. In this exemplary communication system, the transport network is connected to each user network by means of a respective user-network interface (briefly termed "UNI").

For allowing transmission of user data in the form of packets across the transport network, at each UNI the user data received from the associated user network may be suitably encapsulated, and then mapped into a number of data containers supported by the transport network, which data containers are then transmitted to the transport network. Similarly, each UNI receiving data containers from the transport network extracts the user data mapped therein, and then transmits the user data to the associated user network. For instance, in case the user network is an Ethernet network and the transport network is an SDH/SONET network, the Ethernet packets exchanged by such Ethernet network with other Ethernet networks may be encapsulated by means of the GFP (Generic Framing Procedure) technique, and then mapped in a number of higher order or lower order virtual containers. For instance, in case the user network is an Ethernet network and the transport network is an OTN network, the Ethernet packets exchanged by such Ethernet network with other Ethernet networks may be mapped in a number of OPUs or ODUs.

The operator of the transport network typically allocates, for a given user, a number of data containers reserved for transporting user data exchanged by such a user. Data containers may be allocated according to different criteria. For instance, in SDH/SONET networks and in OTN networks, two techniques are known: contiguous concatenation and virtual concatenation (briefly, "VCAT"). By referring to the SDH/SONET networks, according to the contiguous concatenation technique, all the higher order virtual containers and lower order virtual containers of a same administrative unit are allocated to a same user. According to the VCAT technique, each user has allocated a number of higher order virtual containers or lower order virtual containers that form a single virtual concatenation group, but that do not necessarily belong to a same administrative unti. According to the VCAT technique, the number of higher order virtual containers and lower order virtual containers of a virtual concatenation group may be dynamically changed by means of the known Link Capacity Adjustment Scheme (briefly, "LCAS") according to the user traffic characteristics and to the transport network conditions.

US 6,725,401 discloses a method for compensating for failures within a communication network by establishing a set of two or more communications paths across the network between a source node and a destination node. At the source node a status of each one of the set of communications paths is maintained, and the data traffic is load-balanced across those ones of the set of communications paths having an operational status. In the event of failure of a physical network resource, a failure notification message is propagated to the source node, which registers a non-operation status of each path traversing the failed resource. Load-balancing of the data traffic continues across the remaining operational paths. Traffic may be prioritized based on service level agreements and quality of service protection guarantees.

US 2006/187715 discloses a system and method for performing LCAS in a network system, the system having a data aligner configured to align bytes of input data according to groups of members.

### Summary

In a communication system having a transport network, a first user network and a second user network connected by means of the transport network, user data exchanged between the first user network and the second user network are typically protected against failures occurring in the transport network as follows.

The first user network has a pair of edge network elements connected to the transport network by means of respective UNIs. Similarly, the second user network has a pair of edge network elements connected to the transport network by means of respective UNIs. A pair of paths crossing the transport network connects the pair of edge network elements of the first user network with the pair of edge network elements of the second user network.

Typically, each path of the pair has a capacity equal to the maximum transmission rate of the exchanging user data. For instance, in the above mentioned case of Ethernet packets transport over an SDH/SONET network, if the maximum transmission rate of the Ethernet packets is 8.96 Gbit/s, two paths are allocated in the SDH/SONET network, each having a capacity of 8.96 Gbit/s. This may be achieved for instance by allocating 64 higher order virtual containers VC-4 on the first path and 64 higher order virtual containers VC-4 on the second path, the transmission rate of a single higher order virtual container VC-4 being 140 Mbit/s. During normal operation, only 64 higher order virtual containers VC-4 are used. For instance, the first path may be fully used while the second path may be unused. Alternatively, an ECMP ("Equal-cost multi-path routing") may be used, allowing to share transmission of the Ethernet traffic between the two paths. For instance, the Ethernet packets may be transported by 32 higher order virtual containers VC-4 of the first path (while the remaining 32 higher order virtual containers VC-4 are unused) and 32 higher order virtual containers VC-4 of the second path (while the remaining 32 higher order virtual containers VC-4 are unused).

When a failure occurs in the transport network, making at least part of the used resources unavailable, the user data are rerouted to the unused resources. For instance, in the above mentioned case wherein the Ethernet packets are transported by 32 higher order virtual containers VC-4 of the first path and 32 higher order virtual containers VC-4 of the second path, if a failure occurs on the first path, the Ethernet packets are rerouted to the second path that, as mentioned above, has allocated 64 higher order virtual containers VC-4, and may therefore support transmission of all the Ethernet packets.

The Applicant has perceived that the above solution for protecting transmission of user data in a transport network has some drawbacks. Indeed, such a solution disadvantageously implies an inefficient usage of the resources in the transport network, since it requires allocating an overall amount of resources doubling the maximum transmission rate of the user data and, in absence of failures, using only half of such allocated resources for transporting the user data. In other words, in absence of failure, 50% of the allocated resources is disadvantageously unused.

Accordingly, an object of the present invention is providing a method for protecting transmission of user data through a transport network that overcomes the aforesaid drawbacks, i.e. that allows using resources of the transport network in a more efficient way.

According to a first aspect, the present invention provides a method for protecting transmission of user data transmitted from a first user network to a second user network through a transport network, the user data having a maximum transmission rate, the method comprising:
a) in the transport network, in a failure-free status, providing a first path and a second path connecting the first user network with the second user network and allocating a first number of data containers on the first path and a second number of data containers on the second path by means of a virtual concatenation technique implemented by said transport network, the first number of data containers being part of a same first virtual concatenation group and the second number of data containers being part of a same second virtual concatenation group, the first path and the second path having an overall capacity equal to the maximum transmission rate;
b) transmitting a first portion of the user data along the first path using the first virtual concatenation group, and transmitting a second portion of the user data along the second path using the second virtual concatenation group;
c) at a network management server cooperating with the transport network, detecting a failure affecting transmission of the second portion;
d) at the network management server, in response to detecting the failure, switching from the failure-free status to a failure status by operating the transport network so as to increase capacity of the first path to the maximum transmission rate by increasing the first number of data containers; and
e) at the first user network, transmitting the user data along the first path only.

Preferably, step d) comprises operating a link capacity adjustment scheme implemented by the transport network.

Profitably, step c) comprises receiving at the network management server a management message from the transport network, the management message being indicative of the failure.

Preferably, after step c), the method further comprises, if the transport network is an automatic switched transport network, using automatic switching functionalities of the transport network for allocating a path portion bypassing the failure, if the failure occurs on the second path.

Preferably, step b) comprises implementing an equal-cost multi-path routing function in the first user network, so that the first portion is transmitted through a first edge network element of the first user network to the first path and the second portion through a second edge network element of the first user network to the second path.

Preferably, the first user network automatically performs step e) in response to step d) by means of the equal-cost multi-path routing function.

According to a second aspect, the present invention provides a transport system comprising a transport network and a network management server cooperating with the transport network, the transport network being configured to connect a first user network and a second user network,
wherein the transport network has a first path and a second path configured to connect the first user network with the second user network,
wherein the transport network is configured to implement a virtual concatenation technique and to use the virtual concatenation technique for allocating a first number of data containers on the first path and a second number of data containers on the second path, the first number of data containers being part of a same first virtual concatenation group and the second number of data containers being part of a same second virtual concatenation group,
wherein, in a failure-free status, the first path is suitable for supporting transmission of a first portion of user data using the first virtual concatenation group and the second path is suitable for supporting transmission of a second portion of the user data using the second virtual concatenation group, the first path and the second path having an overall capacity equal to a maximum transmission rate of the user data, and
wherein the network management server is configured to detect a failure affecting transmission of the second portion and, in response to the detection, to switch from the failure-free status to a failure status by operating the transport network so as to increase capacity of the first path to the maximum transmission rate by increasing the first number of data containers, thereby allowing the first path supporting transmission of all the user data.

Preferably, the transport network is configured to implement a link capacity adjustment scheme and the network management server is configured to operate the link capacity adjustment scheme for increasing capacity of the first path.

Preferably, the network management server is configured to detect the failure by receiving from the transport network a management message indicative of the failure.

Preferably, the transport network is an automatic switched transport network configured to use automatic switching functionalities for allocating a path portion bypassing the failure, if the failure occurs on the second path.

According to a third aspect, the present invention provides a communication system comprising a first user network, a second user network and a transport system, the transport system comprising a transport network and a network management server cooperating with the transport network, the transport network connecting the first user network with second user network, wherein the transport system is as set forth above.

Preferably, the first user network is configured to implement an equal-cost multi-path routing function, so that the first portion is transmitted through a first edge network element of the first user network to the first path, and the second portion is transmitted through a second edge network element of the first user network to the second path.

Preferably, the first user network is configured to automatically start transmitting the user data only along the first path by means of the equal-cost multi-path routing function, in response to the increasing capacity of the first path.

### Brief description of the Figures

Embodiments of the invention will be better understood by reading the following detailed description, given by way of example and not of limitation, to be read by referring to the accompanying drawings, wherein:
- Figures 1a to 1d show various steps of the method according to a first embodiment of the present invention, applied to an exemplary communication system;
- Figures 2a to 2d show various steps of the method according to a second embodiment of the present invention, applied to an exemplary communication system, in a first failure scenario; and
- Figures 3a to 3d show various steps of the method according to the second embodiment of the present invention, applied to an exemplary communication system, in a second failure scenario.

### Description of embodiments

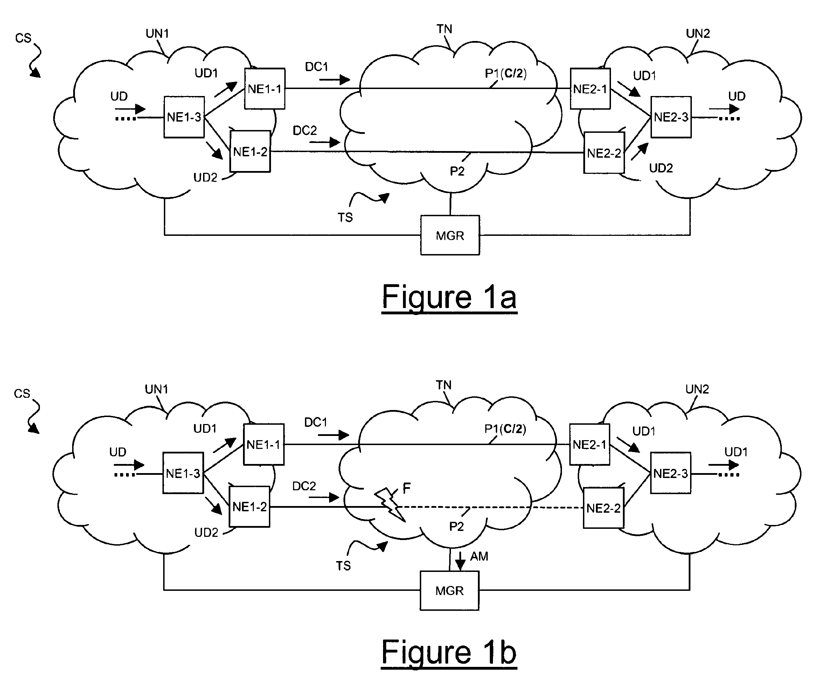

Figures 1a to 1d show a communication system CS in which the method for protecting transmission of user data according to a first embodiment of the present invention may be implemented.

The communication system CS comprises a transport system TS, a first user network UN1 and a second user network UN2. The transport system TS comprises a transport network TN and a network management server MGR cooperating with the transport network TN. The first user network UN1 is connected to the second user network UN2 by means of the transport network TN.

The transport network TN is preferably a circuit-switched network, such as for instance an SDH network, a SONET network, an OTN network, etc. The first user network UN1 and the second user network UN2 are preferably packet-switched networks of a same type, such as for instance Ethernet, IP, ATM, etc.

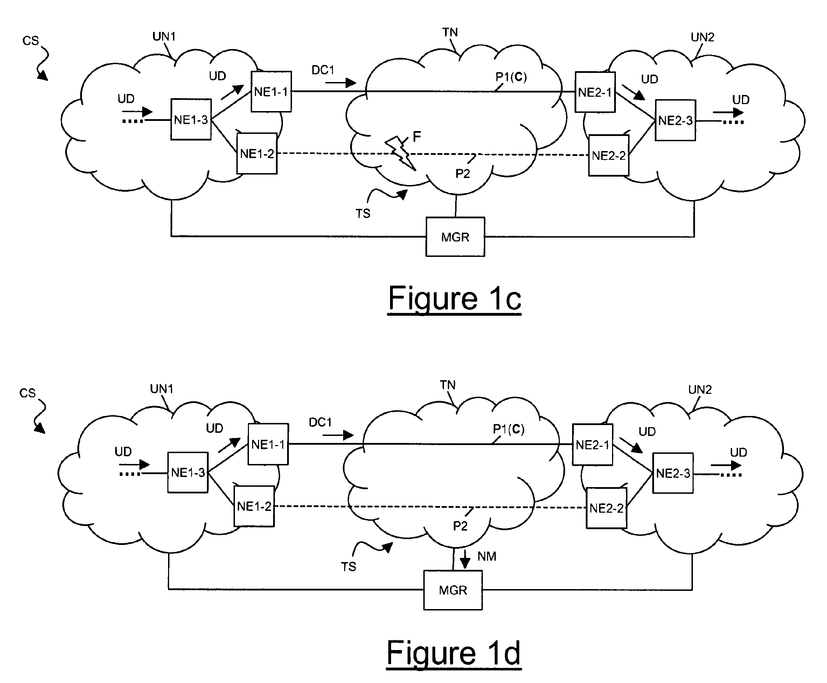

The first user network UN1 preferably comprises a number of network elements. For simplicity, in Figures 1 a to 1 d only three network elements are depicted, i.e. the network elements NE1-1, NE1-2 and NE1-3. Preferably, the network element NE1-3 is connected to both network elements NE1-1 and NE1-2. The network elements NE1-1 and NE1-2 are connected to the transport network TN by means of respective UNIs, that are not shown in the Figures for simplicity. The network elements NE1-1 and NE1-2 are then edge network elements of the first user network UN1.

Similarly, the second user network UN2 preferably comprises a number of network elements. For simplicity, in Figures 1a to 1d only three network elements are depicted, i.e. the network elements NE2-1, NE2-2 and NE2-3. Preferably, the network element NE2-3 is connected to both network elements NE2-1 and NE2-2. The network elements NE2-1 and NE2-2 are connected to the transport network TN by means of UNIs, that are not shown in the Figures for simplicity. The network elements NE2-1 and NE2-2 are then edge network elements of the second user network UN2.

The transport network TN preferably comprises a number of network elements and links between network elements. However, the detailed structure of the transport network TN is not shown in the Figures. In case the transport network TN is an SDH/SONET network or a OTN network, the edge network elements (not shown in the drawings) of the transport network TN are preferably configured to implement the above mentioned VCAT technique with the above mentioned LCAS mechanism.

Herein after, the method for protecting transmission of user data applied to the communication system CS according to a first embodiment of the present invention will be described in detail. To this purpose, it is assumed that user data UD having a maximum transmission rate C are generated within the first user network UN1 and has to be transmitted in a protected way to the second user network UN2 through the transport network TN.

According to this first embodiment, in a failure-free status, a first path P1 and a second path P2 are allocated in the transport network TN for transporting the user data UD. The first path P1 and the second path P2 may be calculated by the network management server MGR. Alternatively, if the transport network is an ASTN network, the first path P1 and the second path P2 may be calculated by suitable GMPLS ("Generalized Multi-Protocol Label Switching") mechanisms implemented at all the network elements of the transport network TN.

The first path P1 connects the edge network element NE1-1 of the first user network UN1 and the edge network element NE2-1 of the second user network UN2, while the second path P2 connects the edge network element NE1-2 of the first user network UN1 and the edge network element NE2-2 of the second user network UN2. The first path P1 and the second path P2 comprise network elements and links of the transport network TN. However, for clarity of the drawings, the detailed structure of the first path P1 and the second path P2 is not shown.

Preferably, on the first path P1 a number of data containers DC1 is allocated, having an overall capacity C/2 equal to half the maximum transmission rate C of the user data UD. Similarly, on the second path P2 a number of data containers DC2 is allocated, having an overall capacity C/2 equal to half the maximum transmission rate C of the user data UD. In case the transport network TN is an SDH/SONET network (the data containers being higher order or lower order virtual containers, as mentioned above) or a OTN network (the data containers being OPUs and ODUs), on each path the data containers are preferably allocated by using the above mentioned VCAT technique. In other words, the data containers allocated on the first path P1 are part of a same virtual concatenation group, and the data containers allocated on the second path P2 are part of a same virtual concatenation group.

For instance, in case the transport network TN is an SDH/SONET network and the maximum transmission rate C is 8.96 Gbit/s, both on the first path P1 and on the second path P2, 32 higher order virtual containers VC-4 may be allocated, providing on each path P1, P2 a capacity C/2 of 4.48 Gbit/s.

After the first path P1 and the second path P2 have been allocated, in the failure-free status the user data UD are transmitted from the first user network UN1 to the second user network UN2 by using the first path P1 and the second path P2. More specifically, by referring to Figure 1a, the user data UD are collected within the first user network UN1 by the network element NE1-3. The network element NE1-3 preferably implements the above mentioned ECMP mechanism, thus dividing the user data UD into a first data portion UD1 and a second data portion UD2. Both the first data portion UD1 and the second data portion UD2 preferably have a maximum transmission rate equal to C/2 (i.e. half the maximum transmission rate C of the user data UD). Then, the network element NE1-3 transmits the first data portion UD1 to the edge network element NE1-1, and the second data portion UD2 to the edge network element NE1-2, as shown in Figure 1a.

The edge network element NE1-1 forwards the first data portion UD1 to its UNI (not shown in Figure 1a), that encapsulates it and maps it into the data containers DC1 allocated on the first path P1. It has to be noticed that the allocated data containers DC1 may be only partially filled with the data of the first data portion UD1. Indeed, when the actual transmission rate of the user data UD is lower than the maximum transmission rate C, also the actual transmission rate of the first data portion UD1 is presumably lower than the capacity C/2 of the first path P1.

After mapping the first data portion UD1 into the allocated data containers DC1, the edge network element NE1-1 transmits the data containers DC1 through the transport network TN along the first path P1 towards the second user network UN2, in particular to its edge network element N2-1, as shown in Figure 1 a.

When the edge network element NE1-2 receives the second data portion UD2 from the network element NE1-3, it preferably forwards the second data portion UD2 to its UNI (not shown in Figure 1a), that encapsulates it and maps it into the data containers DC2 allocated on the second path P2.

After mapping the second data portion UD2 into the allocated data containers DC2, the edge network element NE1-2 transmits the data containers DC2 through the transport network TN along the second path P2 towards the second user network UN2, in particular to its edge network element N2-2, as shown in Figure 1a.

At the second user network UN2, the edge network element NE2-1 receives the data containers DC1 from the first path P1 by means of its UNI (not shown in Figure 1 a), extracts the first data portion UD1 therefrom, and forwards the first data portion UD1 to the network element NE2-3. Similarly, the edge network element NE2-2 receives the data containers DC2 from the second path P2 by means of its UNI (not shown in Figure 1a), extracts the second data portion UD2 therefrom, and forwards the second data portion UD2 to the network element NE2-3. The network element NE2-3 then merges the first data portion UD1 and the second data portion UD2, thereby recovering the user data UD. The network element NE2-3 then forwards the user data UD to other network elements (not shown in the drawings) of the second user network UN2, according to their destinations.

It is now assumed that a failure occurs in the communication system CS. For instance, such a failure may affect one of the first path P1 and the second path P2, or one of the edge network elements NE1-1, NE1-2 of the first user network UN1, or one of the edge network elements NE2-1, NE2-2 of the second user network UN2, or one of the links connecting the network element NE1-3 to the edge network elements NE1-1, NE1-2 of the first user network UN1, or one of the links connecting the network element NE2-3 to the edge network elements NE2-1, NE2-2 of the second user network UN2.

Herein after, by way of example, it is assumed that a failure F occurs on the second path P2. For instance, one of the links of the transport network TN forming the second path P2 becomes failed. This exemplary situation is shown in Figure 1b. Due to the failure F, transmission of the data containers DC2 along the second path P2 is interrupted upstream the failure F.

When the failure F is detected within the transport network TN (typically, by a network element downstream the failure F along the second path P2), the transport network TN preferably notifies the failure to the network management server MGR. To this purpose, the network element detecting the failure F preferably transmits an alarm message AM to the network management server MGR, as shown in Figure 1b. The alarm message AM is preferably formatted according to a management protocol, such as for instance SNMP (Simple Network Management Protocol)/QB3.

Upon reception of the alarm message AM from the transport network TN, the network management server MGR preferably switches from the failure-free status to a failure status by operating the transport network TN so as to increase the capacity of the first path P1 from its current capacity C/2 to the maximum transmission rate C of the user data UD, namely by doubling the number of data containers DC1 allocated on the first path P1. Preferably, if the transport network TN is an SDH/SONET network or an OTN network, and the data containers DC1 on the first path P1 have been allocated by means of the above mentioned VCAT technique (also implementing the LCAS mechanism), the network management server MGR preferably induces the transport network TN to double the number of data containers DC1 allocated on the first path P1 by suitably operating the LCAS mechanism executed by the edge network elements of the transport network TN. Therefore, for instance, if the maximum transmission rate C is 8.96 Gbit/s and 32 higher order virtual containers VC-4 are allocated both on the first path P1 and on the second path P2 (providing on each path a capacity C/2 of 4.48 Gbit/s), the network management server MGR operates the LCAS mechanism for raising the number of higher order virtual containers VC-4 allocated on the first path P1 from 32 to 64. This allows providing the first path P1 with a doubled capacity C, i.e. 8.96 Gbit/s.

Then, after the capacity of the first path P1 has been increased, in the failure status the ECMP mechanism implemented at the network element NE1-3 of the first user network UN1 induces the network element NE1-3 to forward all the user traffic UD collected from the other network elements of the first user network UN1 to the edge network element NE1-1, i.e. the edge network element connected to the path not affected by the failure F.

Therefore, advantageously, after intervention of the network management server MGR, in the failure status the user data UD collected at the network element NE1-3 of the first user network UN1 are all forwarded to the network element NE1-1, that transmits it along the first path P1, as show in Figure 1 c. The first path P1 is now capable of supporting transmission of the whole user data UD, even when the actual transmission rate of the user data UD is equal to the maximum transmission rate C. Therefore, while the failure F on the second path P2 is being fixed, transmission of the user data UD is protected by the first path P1, having now doubled capacity.

Therefore, advantageously, according to this first embodiment of the invention, resources of the transport network TN are used in a more efficient way than according to prior art solutions for protecting transmission of user data. Indeed, while according to the prior art solution the additional resources for protecting transmission of user data on both paths are allocated a *priori* in the transport network, and are accordingly unused until a failure occurs, according to this first embodiment the additional resources for protecting transmission of user data are allocated only upon detection of a failure, on the path that is not affected by the failure. Indeed, while the communication system is normally operating (i.e. in the failure-free status), in the transport network an amount of resources is reserved for transmission of user data on the two paths, that is tailored for allowing transmission of user data at their maximum transmission rate, i.e. C. When a failure occurs on one of the two paths, additional resources are allocated on the path not affected by the failure, in response to detection of the failure. Then, if no failures occur, no unused additional resources are needed.

When the failure F is fixed, the initial configuration of the communication system is preferably restored. More specifically, when the failure F is fixed, the network management server MGR receives a notification message NM from the transport network TN, as shown in Figure 1d. The notification message MM is preferably formatted according to a management protocol, such as for instance the above cited SNMP/QB3.

Upon reception of such a notification message NM, the network management server MGR preferably switches from the failure status to the failure-free status by operating the transport network TN so as to decrease the capacity of the first path P1 from its current capacity C (equal to the maximum transmission rate C of the user data UD) to its initial value C/2, by halving the number of data containers DC1 allocated on the first path P1. Preferably, in case the transport network TN is an SDH/SONET network or an OTN network, and the data containers DC1 on the first path P1 have been allocated by means of the above mentioned VCAT technique also implementing the LCAS mechanism, the network management server MGR preferably induces the transport network TN to halve the number of data containers DC1 allocated on the first path P1 by suitably operating the LCAS mechanism executed at the edge network elements of the transport network TN. Therefore, for instance, if the maximum transmission rate C is 8.96 Gbit/s and 64 higher order virtual containers VC-4 are allocated on the first path P1 (providing a capacity C of 8.96 Gbit/s) when the second path P2 is failed, the network management server MGR operates the LCAS mechanism for reducing the number of higher order virtual containers VC-4 allocated on the first path P1 from 64 to 32. This allows providing the first path P1 with its initial capacity C/2, i.e. 4.48 Gbit/s.

Then, preferably, after the capacity on the first path P1 has been decreased, the ECMP mechanism implemented at the network element NE1-3 of the first user network UN1 induces the network element NE1-3 to divide again the user traffic UD collected from the other network elements of the first user network UN1 in a first data portion UD1 to be forwarded to the edge network element NE1-1 and a second data portion UN2 to be forwarded to the edge network element NE1-2. After intervention of the network management server MGR, the operation of the communication system CS is therefore the same as before the failure F occurred (see Figure 1 a).

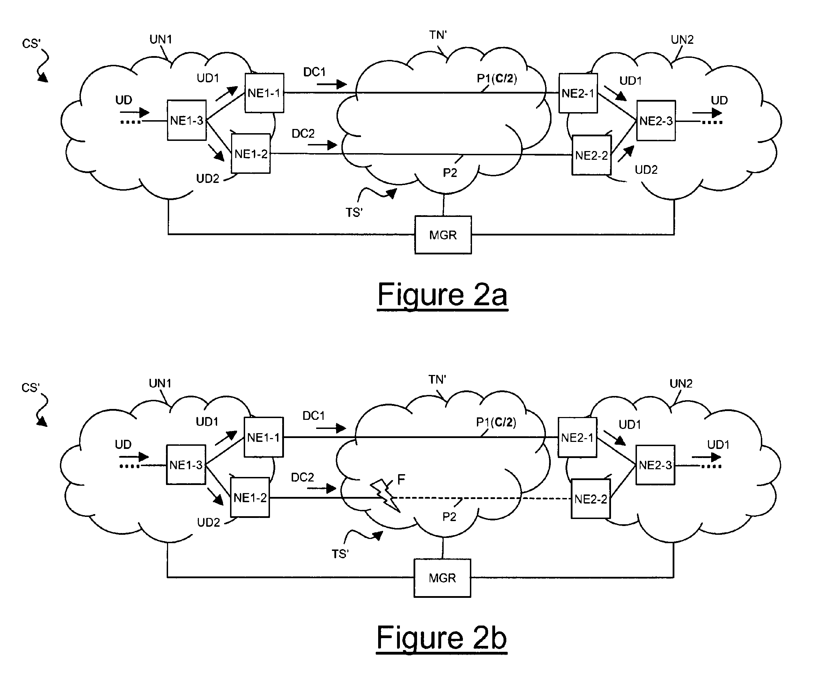

Figures 2a to 2d show a communication system CS' in which the method for protecting transmission of user data according to a second embodiment of the invention may be implemented.

The structure of the communication system CS' is substantially similar to the structure of the communication system CS shown in Figures 1a to 1d. A detailed description will therefore not be repeated. The only difference is that the transport network TN' is a circuit-switched network of the above mentioned ASTN type, i.e. it is provided with GMPLS ("Generalized Multi-Protocol Label Switching") mechanisms allowing the transport network TN' to autonomously modify the paths when a change occurs in the network.

When the communication system CS' normally operates in the failure-free status (see Figure 2a), its operation is similar to the operation of the communication system CS' as described above with reference to Figure 1a. A detailed description will therefore not be repeated.

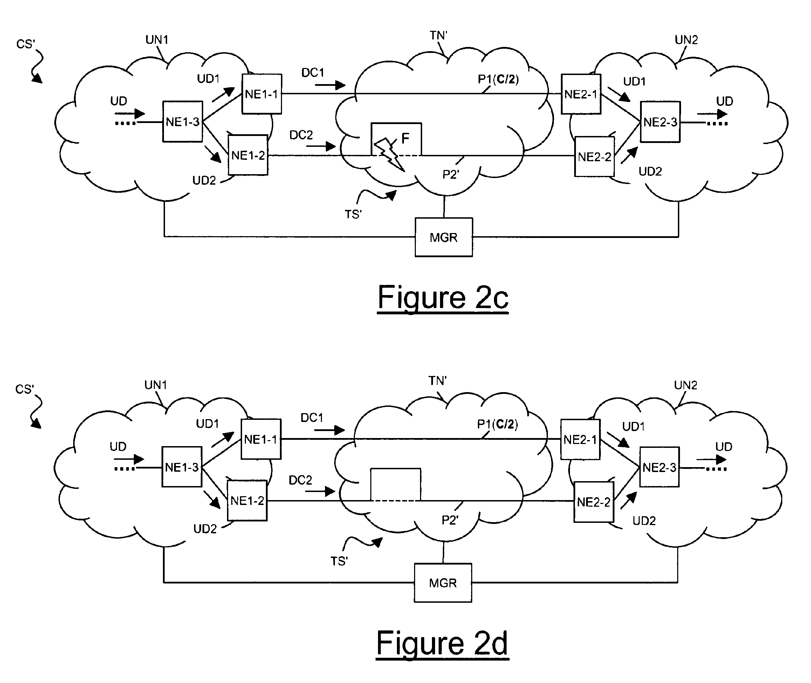

When a failure F occurs in the transport network TN', for example on the second path P2 transporting the second data portion UD2 of the user data UD (as shown in Figure 2b), according to this second embodiment the transport network TN' preferably modifies the second path P2, without requiring any intervention of the network management server MGR, by using the GMPLS mechanisms. For instance, as shown in Figure 2c, the transport network TN' may allocated a portion of path bypassing the failure F, i.e. branching off the second path P2 at a network element located upstream the failure F, and joining again the second path P2 at a network element located downstream the failure F, so as to form a modified second path P2'. The GMPLS mechanisms also preferably changes configuration of the network elements at which the portion of path bypassing the failure F branches off and joins again the second path P2, so that the data containers DC2 in which the second data portion UD2 is mapped are now transmitted along the modified second path P2'.

On this portion of path bypassing the failure F, a number of data containers is allocated, so that the capacity of the portion is equal to the capacity of the second path P2, i.e. C/2. This modified second path P2 is therefore capable of continuing supporting transmission of the second data portion UD2.

When the failure F is fixed (Figure 2d), the second data portion UD2 may continue being transmitted along the modified second path P2'. Alternatively, after the failure F is fixed the GMPLS mechanisms of the transport network TN' may automatically change again configuration of the network elements at which the portion of path bypassing the fixed failure F branches off and joins again the second path P2, for reverting transmission of the data containers DC2 to the originally allocated path P2.

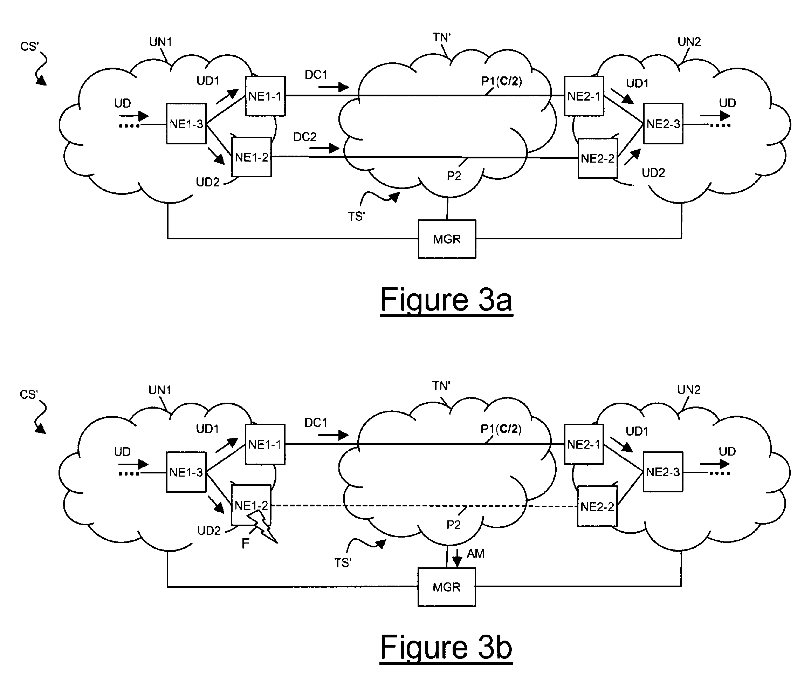

With reference to Figures 3a to 3d, it is now assumed that the failure F occurs out of the transport network TN', e.g. at one of the edge network elements of the first user network UN1, e.g. the edge network element NE1-2, as shown in Figure 3b.

The operation of the communication system CS' in the failure-free status (see Figure 3a) is similar to the operation of the communication system CS described above with reference to Figure 1 a. A detailed description will therefore not be repeated.

When the failure F occurs at the edge network element NE1-2 of the first user network UN1, the GMPLS mechanisms can not protect transmission of the user data UD, since the failure F is out of the transport network TN'. According to this second embodiment, when the failure F is detected (typically, by a network element of the transport network TN' downstream the failure F along the second path P2), the transport network TN' preferably notifies the failure to the network management server MGR. To this purpose, the network element detecting the failure F preferably transmits an alarm message AM to the network management server MGR, as shown in Figure 3b. Also in this second embodiment, the alarm message AM is preferably formatted according to a management protocol, such as for instance the above mentioned SNMP/QB3.

Upon reception of the alarm message AM from the transport network TN', the network management server MGR preferably switches from the failure-free status to a failure status by operating the transport network TN so as to increase the capacity of the first path P1 from its current capacity C/2 to the maximum transmission rate C of the user data UD, namely by doubling the number of data containers DC1 allocated on the first path P1. Preferably, also according to this second embodiment, in case the transport network TN' is an SDH/SONET network or an OTN network, and the data containers DC1 on the first path P1 have been allocated by means of the above mentioned VCAT technique (also implementing the LCAS mechanism), the network management server MGR preferably induces the transport network TN' to double the number of data containers DC1 allocated on the first path P1 by suitably operating the LCAS mechanism executed by the edge network elements of the transport network TN'.

Then, after the capacity of the first path P1 has been increased, in the failure status the ECMP mechanism implemented at the network element NE1-3 of the first user network UN1 induces the network element NE1-3 to forward all the user traffic UD collected from the other network elements of the first user network UN1 to the edge network element NE1-1, i.e. the edge network element connected to the path not affected by the failure F.

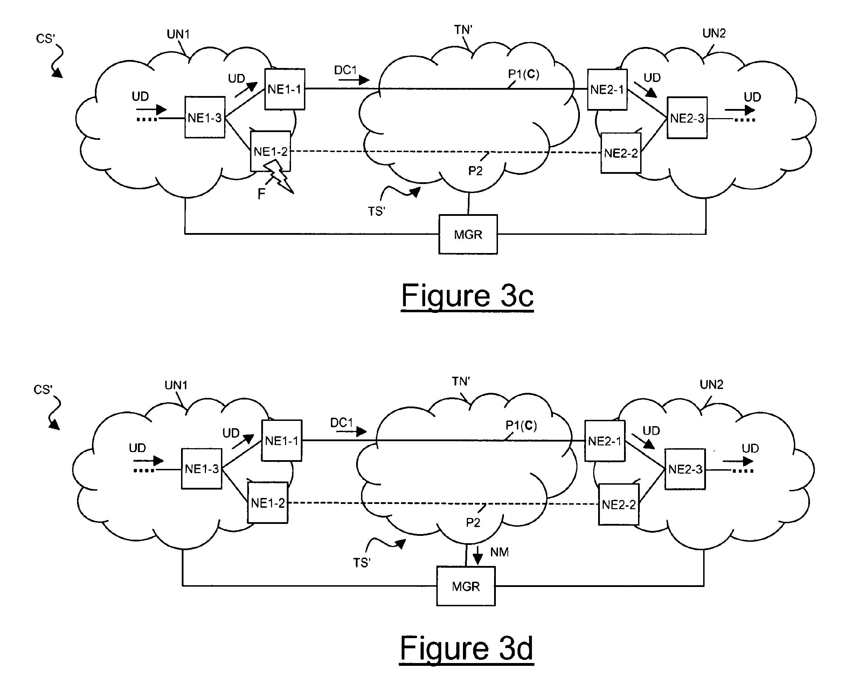

Therefore, advantageously, after intervention of the network management server MGR, also according to this second embodiment, in the failure status the user data UD collected at the network element NE1-3 of the first user network UN1 are all forwarded to the network element NE1-1, that transmits it along the first path P1, as show in Figure 3c. The first path P1 is now capable of supporting transmission of the whole user data UD, even when the actual transmission rate of the user data UD is equal to the maximum transmission rate C. Therefore, also according to this second embodiment, while the failure F on the second path P2 is being fixed, transmission of the user data UD is protected by the first path P1, having now doubled capacity.

When the failure F is fixed, the initial configuration of the communication system CS' is preferably restored. More specifically, when the failure F is fixed, the network management server MGR receives a notification message NM from the transport network TN', as shown in Figure 3d. Preferably, the notification message NM is formatted according to a management protocol, such as for instance the above cited SNMP/QB3.

Upon reception of such a notification message NM, the network management server MGR preferably switches from the failure status to the failure-free status by operating the transport network TN so as to decrease the capacity of the first path P1 from its current capacity C (equal to the maximum transmission rate C of the user data UD) to its initial value C/2, by halving the number of data containers DC1 allocated on the first path P1. Preferably, in case the transport network TN' is an SDH/SONET network or an OTN network, and the data containers DC1 on the first path P1 have been allocated by means of the above mentioned VCAT technique also implementing the LCAS mechanism, the network management server MGR preferably operates the transport network TN' so as to halve the number of data containers DC1 allocated on the first path P1, by suitably operating the LCAS mechanism executed at the edge network elements of the transport network TN'.

Then, preferably, after the capacity on the first path P1 has been decreased, the ECMP mechanism implemented at the network element NE1-3 of the first user network UN1 induces the network element NE1-3 to divide again the user traffic UD collected from the other network elements of the first user network UN1 in a first data portion UD1 to be forwarded to the edge network element NE1-1 and a second data portion UN2 to be forwarded to the edge network element NE1-2.

Therefore, advantageously, according to this second embodiment the mechanism for protecting transmission of user data in a transport network complements the GMPLS mechanisms of the ATSN-type transport network TN'. Indeed, when the failure F occurs within the transport network TN', the GMPLS mechanisms take actions for protecting transmission of user traffic, without requiring any intervention of the network management server MGR. On the other hand, advantageously, when a failure occurs outside the transport network TN', the network management server MGR suitably operates the transport network TN' for increasing capacity of the failure-free path, thus allowing it to protect transmission of the user data.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

## Claims

1. A method for protecting transmission of user data (UD) transmitted from a first user network (UN1) to a second user network (UN2) through a transport network (TN, TN'), said user data (UD) having a maximum transmission rate (C), said method comprising the step of :
a) in said transport network (TN, TN'), in a failure-free status, providing a first path (P1) and a second path (P2) connecting said first user network (UN1) with said second user network (UN2) and allocating a first number of data containers (DC1) on said first path (P1) and a second number of data containers (DC2) on said second path (P2) by means of a virtual concatenation technique implemented by said transport network (TN, TN'), said first number of data containers (DC1) being part of a same first virtual concatenation group and said second number of data containers (DC2) being part of a same second virtual concatenation group, said first path (P1) and said second path (P2) having an overall capacity equal to said maximum transmission rate (C);
b) transmitting a first portion (UD1) of said user data (UD) along said first path (P1) using said first virtual concatenation group, and transmitting a second portion (UD2) of said user data (UD) along said second path (P2) using said second virtual concatenation group;
c) at a network management server (MGR) cooperating with said transport network (TN, TN'), detecting a failure (F) affecting transmission of said second portion (UD2);
d) at said network management server (MGR), in response to said detecting said failure (F), switching from said failure-free status to a failure status by operating said transport network (TN, TN') so as to increase capacity of said first path (P1) to said maximum transmission rate (C) by increasing said first number of data containers (DC1); and
e) at said first user network (UN1), transmitting said user data (UD) along said first path (P1) only.

2. The method according to claim 1, wherein said step d) comprises operating a link capacity adjustment scheme implemented by said transport network (TN, TN').

3. The method according to claim 1 or 2, wherein said step c) comprises receiving at said network management server (MGR) a management message (AM) from said transport network (TN, TN'), said management message (AM) being indicative of said failure (F).

4. The method according to any of the preceding claims wherein, after said step c), it further comprises, if said transport network (TN') is an automatic switched transport network, using automatic switching functionalities of said transport network (TN') for allocating a path portion bypassing said failure (F), if said failure (F) occurs on said second path (P2).

5. The method according to any of the preceding claims, wherein said step b) comprises implementing an equal-cost multi-path routing function in said first user network (UN1), so that said first portion (UD1) is transmitted through a first edge network element (NE1-1) of said first user network (UN1) to said first path (P1), and said second portion (UD2) through a second edge network element (NE1-2) of said first user network (UN1) to said second path (P2).

6. The method according to claim 5, wherein said first user network (UN1) automatically performs said step e) in response to said step d) by means of said equal-cost multi-path routing function.

7. A transport system (TS, TS') comprising a transport network (TN, TN') and a network management server (MGR) cooperating with said transport network (TN, TN'), said transport network (TN, TN') being suitable for connecting a first user network (UN1) with a second user network (UN2),
wherein said transport network (TN, TN') has a first path (P1) and a second path (P2) configured to connect said first user network (UN1) with said second user network (UN2),
wherein said transport network (TN, TN') is configured to implement a virtual concatenation technique and to use said virtual concatenation technique for allocating a first number of data containers (DC1) on said first path (P1) and a second number of data containers (DC2) on said second path (P2), said first number of data containers (DC1) being part of a same first virtual concatenation group and said second number of data containers (DC2) being part of a same second virtual concatenation group,
wherein, in a failure-free status, said first path (P1) is suitable for supporting transmission of a first portion (UD1) of user data (UD) using said first virtual concatenation group and said second path (P2) is suitable for supporting transmission of a second portion (UD2) of said user data (UD) using said second virtual concatenation group, said first path (P1) and said second path (P2) having an overall capacity equal to a maximum transmission rate (C) of said user data (UD), and
wherein said network management server (MGR) is configured to detect a failure (F) affecting transmission of said second portion (UD2) and, in response to said detection, to switch from said failure-free status to a failure status by operating said transport network (TN, TN') so as to increase capacity of said first path (P1) to said maximum transmission rate (C) by increasing said first number of data containers (DC1), thereby allowing said first path (P1) supporting transmission of all said user data (UD).

8. The transport system (TS, TS') according to claim 7, wherein said transport network (TN, TN') is configured to implement a link capacity adjustment scheme and wherein said network management server (MGR) is configured to operate said link capacity adjustment scheme for increasing capacity of said first path (P1).

9. The transport system (TS, TS') according to claim 7 or 8, wherein said network management server (MGR) is configured to detect said failure (F) by receiving from said transport network (TN, TN') a management message (AM) indicative of said failure (F).

10. The transport system (TS, TS') according to any of claims 7 to 9, wherein said transport network (TN') is an automatic switched transport network configured to use automatic switching functionalities for allocating a path portion bypassing said failure (F), if said failure (F) occurs on said second path (P2).

11. A communication system (CS, CS') comprising a first user network (UN1), a second user network (UN2) and a transport system (TS, TS'), the transport system (TS, TS') comprising a transport network (TN, TN') and a network management server (NMS) cooperating with said transport network (TN, TN'), said transport network (TN, TN') connecting said first user network (UN1) with second user network (UN2), wherein said transport system (TS, TS') is according to any of claims 7 to 10.

12. The communication system (CS, CS') according to claim 11, wherein said first user network (UN1) is configured to implement an equal-cost multi-path routing function, so that said first portion (UD1) is transmitted through a first edge network element (NE1-1) of said first user network (UN1) to said first path (P1), and said second portion (UD2) in transmitted through a second edge network element (NE1-2) of said first user network (UN1) to said second path (P2).

13. The communication system (CS, CS') according to claim 12, wherein said first user network (UN1) is configured to automatically start transmitting said user data (UD) only along said first path (P1) by means of said equal-cost multi-path routing function, in response to said increasing capacity of said first path (P1).

## Patentansprüche

1. Verfahren zum Schutz der Übertragung von Benutzerdaten (UD), die über ein Transportnetz (TN, TN') von einem ersten Benutzernetzwerk (UN1) an ein zweites Benutzernetzwerk (UN2) übertragen werden, wobei die besagten Benutzerdaten (UD) eine maximale Übertragungsrate (C) aufweisen, wobei das besagte Verfahren die folgenden Schritte umfasst:
a) In dem besagten Transportnetz (TN, TN'), in einem fehlerfreien Zustand, Bereitstellen eines ersten Pfads (P1) und eines zweiten Pfads (P2), welche das besagte erste Benutzernetzwerk (UN1) mit dem besagten zweiten Benutzernetzwerk (UN2) verbinden, und Zuteilen einer ersten Anzahl von Datencontainern (DC1) auf dem besagten ersten Pfad (P1) und einer zweiten Anzahl von Datencontainern (DC2) auf dem besagten zweiten Pfad (P2) anhand einer von dem besagten Transportnetz (TN, TN') implementierten virtuellen Verkettungstechnik, wobei die besagte erste Anzahl von Datencontainern (DC1) Teil einer selben ersten virtuellen Verkettungsgruppe ist und die besagte zweite Anzahl von Datencontainern (DC2) Teil einer selben zweiten virtuellen Verkettungsgruppe ist, wobei der besagte erste Pfad (P1) und der besagte zweite Pfad (P2) eine Gesamtkapazität aufweisen, welche der besagten maximalen Übertragungsrate (C) entspricht;
b) Übertragen eines ersten Teils (UD1) der besagten Benutzerdaten (UD) über den besagten ersten Pfad (P1) unter Verwendung der besagten ersten virtuellen Verkettungsgruppe, und Übertragen eines zweiten Teils (UD2) der besagten Benutzerdaten (UD) über den besagten zweiten Pfad (P2) unter Verwendung der besagten zweiten virtuellen Verkettungsgruppe;
c) an einem Netzwerkverwaltungsserver (MGR), welcher mit dem besagten Transportnetz (TN, TN') zusammenwirkt, Erkennen eines Fehlers (F), der die Übertragung des besagten zweiten Teils (UD2) beeinträchtigt;
d) an dem besagten Netzwerkverwaltungsserver (MGR), in Reaktion auf das besagte Erkennen des besagten Fehlers (F), Schalten von dem besagten fehlerfreien Zustand in einen Fehlerzustand, indem das besagte Transportnetz (TN, TN') derart betrieben wird, dass die Kapazität des besagten ersten Pfads (P1) durch Erhöhen der besagten ersten Anzahl von Datencontainern (DC1) auf die besagte maximale Übertragungsrate (C) erhöht wird; und
e) an dem besagten ersten Benutzernetzwerk (UN1). Übertragen der besagten Benutzerdaten (UD) nur über den besagten ersten Pfad (P1).

2. Verfahren nach Anspruch 1, wobei der besagte Schritt d) das Betreiben einer von dem besagten Transportnetz (TN, TN') implementierten Verbindungskapazitätsanpassungsregelung umfasst.

3. Verfahren nach Anspruch 1 oder 2, wobei der besagte Schritt c) das Empfangen, an dem besagten Netzwerkverwaltungsserver (MGR), einer Verwaltungsnachricht (AM) von dem besagten Transportnetz (TN, TN') umfasst, wobei die besagte Verwaltungsnachricht (AM) für den besagten Fehler (F) indikativ ist.

4. Verfahren nach einem beliebigen der vorstehenden Ansprüche, wobei es, wenn das besagte Transportnetz (TN') ein automatisches vermitteltes Transportnetz ist, nach Durchführen des besagten Schritts c) weiterhin das Verwenden von automatischen Vermittlungsfunktionen des besagten Transportnetzes (TN') für das Zuteilen eines Pfadabschnitts, welcher den besagten Fehler (F) überbrückt, wenn der besagte Fehler (F) auf dem besagten zweiten Pfad (P2) auftritt, umfasst.

5. Verfahren nach einem beliebigen der vorstehenden Ansprüche, wobei der besagte Schritt b) das Implementieren einer kostengleichen Mehrpfad-Routingfunktion in dem besagten ersten Benutzernetzwerk (UN1) umfasst, so dass der besagte erste Teil (UD1) über ein erstes Netzrandelement (NE1-1) des besagten ersten Benutzernetzwerks (UN1) an den besagten ersten Pfad (P1) übertragen wird, und der besagte zweite Teil (UD2) über ein zweites Netzrandelement (NE1-2) des besagten ersten Benutzernetzwerk (UN1) an den besagten zweiten Pfad (P2) übertragen wird.

6. Verfahren nach Anspruch 5, wobei das besagte erste Benutzernetzwerk (UN1) automatisch den besagten Schritt e) in Reaktion auf den besagten Schritt d) anhand der besagten kostengleichen Mehrpfad-Routingfunktion durchführt.

7. Transportsystem (TS, TS'), umfassend ein Transportnetz (TN, TN') und einen Netzwerkverwaltungsserver (MGR), welcher mit dem besagten Transportnetz (TN, TN') zusammenwirkt, wobei das besagte Transportnetz (TN, TN') geeignet ist, ein erstes Benutzernetzwerk (UN1) mit einem zweiten Benutzernetzwerk (UN2) zu verbinden,
wobei das besagte Transportnetz (TN, TN') einen ersten Pfad (P1) und einen zweiten Pfad (P2) aufweist, die dafür konfiguriert sind, das besagte erste Benutzernetzwerk (UN1) mit dem besagten zweiten Benutzernetzwerk (UN2) zu verbinden,
wobei das besagte Transportnetz (TN, TN') dafür konfiguriert ist, eine virtuelle Verkettungstechnik zu implementieren und die besagte virtuelle Verkettungstechnik für das Zuteilen einer ersten Anzahl von Datencontainern (DC1) auf dem besagten ersten Pfad (P1) und einer zweiten Anzahl von Datencontainern (DC2) auf dem besagten zweiten Pfad (P2) zu verwenden, wobei die besagte erste Anzahl von Datencontainern (DC1) Teil einer selben virtuellen Verkettungsgruppe ist, und die besagte zweite Anzahl von Datencontainern (DC2) Teil einer selben zweiten virtuellen Verkettungsgruppe ist,
wobei, in einem fehlerfreien Zustand, der besagte erste Pfad (P1) geeignet ist, die Übertragung eines ersten Teils (UD1) von Benutzerdaten (UD) unter Verwendung der besagten ersten virtuellen Verkettungsgruppe zu unterstützen, und der besagte zweite Pfad (P2) geeignet ist, die Übertragung eines zweiten Teils (UD2) der besagten Benutzerdaten (UD) unter Verwendung der besagten zweiten virtuellen Verkettungsgruppe zu unterstützen, wobei der besagte erste Pfad (P1) und der besagte zweite Pfad (P2) eine Gesamtkapazität aufweisen, welche einer maximalen Übertragungsrate (C) der besagten Benutzerdaten (UD) entspricht, und
wobei der besagte Netzwerkverwaltungsserver (MGR) dafür konfiguriert ist, einen Fehler (F), welcher die Übertragung des besagten zweiten Teils (UD2) beeinträchtigt, zu erkennen und, in Reaktion auf das besagte Erkennen, von dem besagten fehlerfreien Zustand in einen Fehlerzustand zu schalten, indem er das besagte Transportnetz (TN, TN') derart betreibt, dass die Kapazität des besagten ersten Pfads (P1) durch die Erhöhung der besagten ersten Anzahl von Datencontainern (DC1) auf die maximale Übertragungsrate (C) erhöht wird, wodurch es dem besagten ersten Pfad (P1) ermöglicht wird, die Übertragung aller der besagten Benutzerdaten (UD) zu unterstützen.

8. Transportsystem (TS, TS') nach Anspruch 7, wobei das besagte Transportnetz (TN, TN') dafür konfiguriert ist, eine Verbindungskapazitätsanpassungsregelung zu implementieren, und wobei der besagte Netzwerkverwaltungsserver (MGR) dafür konfiguriert ist, die besagte Verbindungskapazitätsanpassungsregelung zum Erhöhen der Kapazität des besagten ersten Pfads (P1) zu betreiben.

9. Transportsystem (TS, TS') nach Anspruch 7 oder 8, wobei der besagte Netzwerkverwaltungsserver (MGR) dafür konfiguriert ist, den besagten Fehler (F) durch den Empfang, von dem besagten Transportnetz (TN, TN'), einer Vernraltungsnachricht (AM), welche für den besagten Fehler (F) indikativ ist, zu erkennen.

10. Transportsystem (TS, TS') nach einem beliebigen der Ansprüche 7 bis 9, wobei das besagte Transportnetz (TN') ein automatisches vermitteltes Transportnetz und dafür konfiguriert ist, automatische Vermittlungsfunktionen für die Zuteilung eines Pfadabschnitts, welcher den besagten Fehler (F) überbrückt, wenn der besagte Fehler (F) auf dem besagten zweiten Pfad (P2) auftritt, zu verwenden.

11. Kommunikationssystem (CS, CS'), umfassend ein erstes Benutzernetzwerk (UN1), ein zweites Benutzernetzwerk (UN2) und ein Transportsystem (TS, TS'), wobei das Transportsystem (TS, TS') ein Transportnetz (TN, TN') und einen Netzwerkverwaltungsserver (NMS), welcher mit dem besagten Transportnetz (TN, TN') zusammenwirkt, umfasst, wobei das besagte Transportnetz (TN, TN') das besagte erste Benutzernetzwerk (UN1) mit dem besagten zweiten Benutzernetzwerk (UN2) verbindet, wobei das besagte Transportsystem (TS, TS') einem beliebigen der Ansprüche 7 bis 10 entspricht.

12. Kommunikationssystem (CS, CS') nach Anspruch 11, wobei das besagte erste Benutzernetzwerk (UN1) dafür konfiguriert ist, eine kostengleiche Mehrpfad-Routingfunktion derart zu implementieren, dass der besagte erste Teil (UD1) über ein erstes Netzrandelement (NE1-1) des besagten ersten Benutzernetzwerks (UN1) an den besagten ersten Pfad (P1) übertragen wird, und der besagte zweite Teil (UD2) über ein zweites Netzrandelement (NE1-2) des besagten ersten Benutzernetzwerks (UN1) an den besagten zweiten Pfad (P2) übertragen wird.

13. Kommunikationssystem (CS, CS') nach Anspruch 12, wobei das besagte erste Benutzernetzwerk (UN1) dafür konfiguriert ist, die Übertragung der besagten Benutzerdaten (UD) in Reaktion auf das besagte Erhöhen der Kapazität des besagten ersten Pfads anhand der besagten kostengleichen Mehrpfad-Routingfunktion nur über den besagten ersten Pfad (P1) automatisch zu starten.

## Revendications

1. Procédé de protection de la transmission de données d'utilisateur (UD) transmises à partir d'un premier réseau d'utilisateur (UN1) vers un deuxième réseau d'utilisateur (UN2) par l'intermédiaire d'un réseau de transport (TN, TN'), lesdites données d'utilisateur (UD) présentant un débit de transmission maximum (C), ledit procédé comprenant les étapes suivantes:
a) dans ledit réseau de transport (TN, TN'), dans un état sans défaillance, fournir un premier chemin (P1) et un deuxième chemin (P2) connectant ledit premier réseau d'utilisateur (UN1) audit deuxième réseau d'utilisateur (UN2) et allouer un premier nombre de conteneurs de données (DC1) sur ledit premier chemin (P1) et un deuxième nombre de conteneurs de données (DC2) sur ledit deuxième chemin (P2) au moyen d'une technique de concaténation virtuelle mise en oeuvre par ledit réseau de transport (TN, TN'), ledit premier nombre de conteneurs de données (DC1) faisant partie d'un même premier groupe de concaténation virtuelle et ledit deuxième nombre de conteneurs de données (DC2) faisant partie d'un même deuxième groupe de concaténation virtuelle, ledit premier chemin (P1) et ledit deuxième chemin (P2) ayant une capacité globale égale audit débit de transmission maximum (C) ;
b) transmettre une première partie (UD1) desdites données d'utilisateur (UD) le long dudit premier chemin (P1) en utilisant ledit premier groupe de concaténation virtuelle, et transmettre une deuxième partie (UD2) desdites données d'utilisateur (UD) le long dudit deuxième chemin (P2) en utilisant ledit deuxième groupe de concaténation virtuelle ;
c) au niveau d'un serveur de gestion de réseau (MGR) coopérant avec ledit réseau de transport (TN, TN'), détecter une défaillance (F) affectant la transmission de ladite deuxième partie (UD2) ;
d) au niveau dudit serveur de gestion de réseau (MGR), en réponse à ladite détection de ladite défaillance (F), passer dudit état sans défaillance à un état de défaillance en exécutant ledit réseau de transport (TN, TN') de sorte à augmenter la capacité dudit premier chemin (P1) jusqu'à atteindre ledit débit de transmission maximum (C) en augmentant ledit premier nombre de conteneurs de données (DC1) ; et
e) au niveau dudit premier réseau d'utilisateur (UN1), transmettre lesdites données d'utilisateur (UD) le long dudit premier chemin (P1) seulement.

2. Procédé selon la revendication 1, dans lequel ladite étape d) comprend l'exécution d'un système d'ajustement de capacité de liaison mis en oeuvre par ledit réseau de transport (TN, TN').

3. Procédé selon la revendication 1 ou 2, dans lequel ladite étape c) comprend la réception au niveau dudit serveur de gestion de réseau (MGR) d'un message de gestion (AM) provenant dudit réseau de transport (TN, TN'), ledit message de gestion (AM) indiquant ladite défaillance (F).

4. Procédé selon l'une quelconque des revendications précédentes dans lequel, après ladite étape c), il comprend en outre, si ledit réseau de transport (TN') est un réseau de transport à commutation automatique, l'utilisation de fonctions de commutation automatique dudit réseau de transport (TN') pour allouer une partie de chemin évitant ladite défaillance (F), si ladite défaillance (F) se produit sur ledit deuxième chemin (P2).

5. Procédé selon l'une quelconque des revendications précédentes, dans lequel ladite étape b) comprend la mise en oeuvre d'une fonction de routage à chemins multiples de coût égal dans ledit premier réseau d'utilisateur (UN1), de sorte que ladite première partie (UD1) soit transmise par l'intermédiaire d'un premier élément de réseau de bord (NE1-1) dudit premier réseau d'utilisateur (UN1) audit premier chemin (P1), et que ladite deuxième partie (UD2) soit transmise par l'intermédiaire d'un deuxième élément de réseau de bord (NE1-2) dudit premier réseau d'utilisateur (UN1) audit deuxième chemin (P2).

6. Procédé selon la revendication 5, dans lequel ledit premier réseau d'utilisateur (UN1) exécute automatiquement ladite étape e) en réponse à ladite étape d) au moyen de ladite fonction de routage à chemins multiples de coût égal.

7. Système de transport (TS, TS') comprenant un réseau de transport (TN, TN') et un serveur de gestion de réseau (MGR) coopérant avec ledit réseau de transport (TN, TN'), ledit réseau de transport (TN, TN') permettant de connecter un premier réseau d'utilisateur (UN1) à un deuxième réseau d'utilisateur (UN2),
dans lequel ledit réseau de transport (TN, TN') présente un premier chemin (P1) et un deuxième chemin (P2) configurés pour connecter ledit premier réseau d'utilisateur (UN1) audit deuxième réseau d'utilisateur (UN2),
dans lequel ledit réseau de transport (TN, TN') est configuré pour mettre en oeuvre une technique de concaténation virtuelle et pour utiliser ladite technique de concaténation virtuelle pour allouer un premier nombre de conteneurs de données (DC1) sur ledit premier chemin (P1) et un deuxième nombre de conteneurs de données (DC2) sur ledit deuxième chemin (P2), ledit premier nombre de conteneurs de données (DC1) faisant partie d'un même premier groupe de concaténation virtuelle et ledit deuxième nombre de conteneurs de données (DC2) faisant partie d'un même deuxième groupe de concaténation virtuelle,
dans lequel, dans un état sans défaillance, ledit premier chemin (P1) permet de prendre en charge la transmission d'une première partie (UD1) de données d'utilisateur (UD) en utilisant ledit premier groupe de concaténation virtuelle et ledit deuxième chemin (P2) permet de prendre en charge la transmission d'une deuxième partie (UD2) desdites données d'utilisateur (UD) en utilisant ledit deuxième groupe de concaténation virtuelle, ledit premier chemin (P1) et ledit deuxième chemin (P2) présentant une capacité globale égale à un débit de transmission maximum (C) desdites données d'utilisateur (UD), et
dans lequel ledit serveur de gestion de réseau (MGR) est configuré pour détecter une défaillance (F) affectant la transmission de ladite deuxième partie (UD2) et, en réponse à ladite détection, pour passer dudit état sans défaillance à un état de défaillance en exécutant ledit réseau de transport (TN, TN') de sorte à augmenter la capacité dudit premier chemin (P1) jusqu'à atteindre ledit débit de transmission maximum (C) en augmentant ledit premier nombre de conteneurs de données (DC1), permettant ainsi audit premier chemin (P1) de prendre en charge la transmission de toutes lesdites données d'utilisateur (UD).

8. Système de transport (TS, TS') selon la revendication 7, dans lequel ledit réseau de transport (TN, TN') est configuré pour mettre en oeuvre un système d'ajustement de capacité de liaison et dans lequel ledit serveur de gestion de réseau (MGR) est configuré pour exécuter ledit système d'ajustement de capacité de liaison pour augmenter la capacité dudit premier chemin (P1).

9. Système de transport (TS, TS') selon la revendication 7 ou 8, dans lequel ledit serveur de gestion de réseau (MGR) est configuré pour détecter ladite défaillance (F) en recevant dudit réseau de transport (TN, TN') un message de gestion (AM) indiquant ladite défaillance (F).

10. Système de transport (TS, TS') selon l'une quelconque des revendications 7 à 9, dans lequel ledit réseau de transport (TN') est un réseau de transport à commutation automatique configuré pour utiliser des fonctions de commutation automatique pour allouer une partie de chemin évitant ladite défaillance (F), si ladite défaillance (F) se produit sur ledit deuxième chemin (P2).

11. Système de communication (CS, CS') comprenant un premier réseau d'utilisateur (UN1), un deuxième réseau d'utilisateur (UN2) et un système de transport (TS, TS'), le système de transport (TS, TS') comprenant un réseau de transport (TN, TN') et un serveur de gestion de réseau (NMS) coopérant avec ledit réseau de transport (TN, TN'), ledit réseau de transport (TN, TN') connectant ledit premier réseau d'utilisateur (UN1) au deuxième réseau d'utilisateur (UN2), dans lequel ledit système de transport (TS, TS') est conforme à l'une quelconque des revendications 7 à 10.

12. Système de communication (CS, CS') selon la revendication 11, dans lequel ledit premier réseau d'utilisateur (UN1) est configuré pour mettre en oeuvre une fonction de routage à chemins multiples de coût égal, de sorte que ladite première partie (UD1) soit transmise par l'intermédiaire d'un premier élément de réseau de bord (NE1-1) dudit premier réseau d'utilisateur (UN1) audit premier chemin (P1), et que ladite deuxième partie (UD2) soit transmise par l'intermédiaire d'un deuxième élément de réseau de bord (NE1-2) dudit premier réseau d'utilisateur (UN1) audit deuxième chemin (P2).

13. Système de communication (CS, CS') selon la revendication 12, dans lequel ledit premier réseau d'utilisateur (UN1) est configuré pour démarrer automatiquement la transmission desdites données d'utilisateur (UD) uniquement le long dudit premier chemin (P1) au moyen de ladite fonction de routage à chemins multiples de coût égal, en réponse à ladite augmentation de la capacité dudit premier chemin (P1).
